# EUROPEAN PATENT APPLICATION

(11) **EP 1 530 391 A1**
(43) Date of publication of application: **11.05.2005**
(21) Application number: 04021049.4
(22) Date of filing: 03.09.2004
(51) Int. Cl.: H04Q 7/36, H04Q 7/38

(54) **Method for planning cells and method for scanning a power of a neighbor base stations in broadband wireless access communication system**

(30) Priority: 10.11.2003 KR 2003079208
(71) Applicant: Samsung Electronics Co., Ltd., Suwon-si, Gyeonggi-do (KR)
(72) Inventor: Chang, Sun-Ny, Suwon-si Gyeonggi-do (KR); Park, Jeong-Hoon, Suwon-si Gyeonggi-do (KR)
(74) Representative: Grünecker, Kinkeldey, Stockmair & Schwanhäusser Anwaltssozietät

(57) **Abstract**

A method for planning cells in a broadband communication system and a method for scanning the power of a neighbor base station of the same system. With no need to set a separate scanning interval for measuring the power of a neighbor base station, a subscriber terminal measures the power in a section or duration of a data frame, received from a serving base station, in which there is no data allocated to the terminal. This increases transmission efficiency of the system. The terminal can also simultaneously demodulate broadcast channel information from two different base stations whose broadcast channels are differently located. This enables the terminal to communicate simultaneously with a plurality of base stations, and communicate with the serving base station while measuring the power of the neighbor base station.

## Description

The present invention relates generally to a broadband wireless access communication system, and more particularly to a method for planning cells in a broadband communication system and a method for scanning the power of a neighbor base station of the same system.

In order to measure the power of a neighbor base station in a broadband wireless access communication system, a terminal in the system usually requests a serving base station to assign a scanning interval for measuring the power of the neighbor base station. The power of the neighbor base station is measured during the scanning interval assigned by the serving base station.

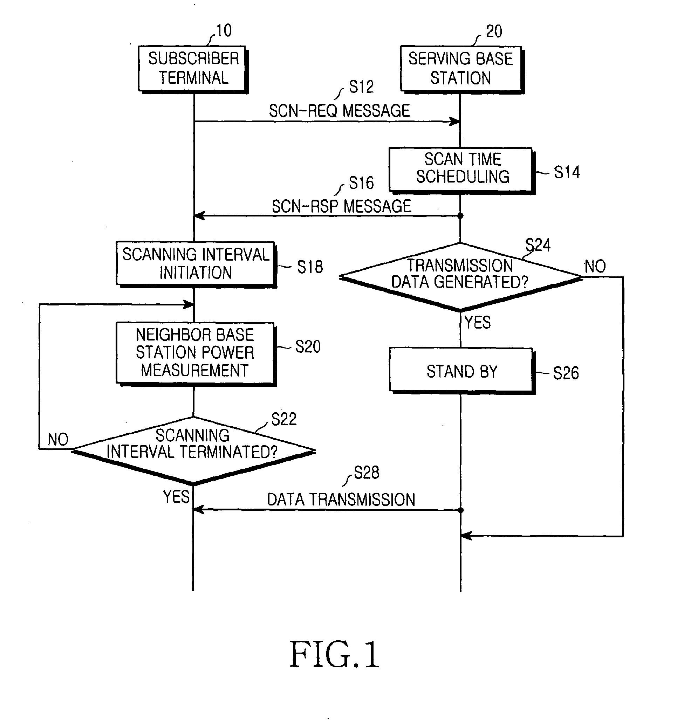

Fig. 1 is a flow chart illustrating a method for scanning a power of a neighbor base station in a conventional broadband wireless access communication system. As illustrated in Fig. 1, a subscriber terminal 10 in the broadband wireless communication system requests a scanning interval from a serving base station 20 by sending a scanning interval request message (SCN-REQ message) to the serving base station 20 in step S12. The scanning interval is a time interval required for the subscriber terminal 10 to scan the power of the neighbor base station.

Upon receiving the scanning interval request message (SCN-REQ message), the serving base station 20 schedules a scanning time in response to the request message in step S14, and then transmits a response message (SCN-RSP message) to the subscriber terminal 10 in step S16. The response message (SCN-RSP message) contains information of the start time, length, etc., for the scanning interval.

Upon receiving the response message (SCN-RSP message), the subscriber terminal 10 reads the scanning interval start time and length from the response message. The terminal 10 initiates the scanning interval at the read start time in step S18, and then measures the power of a neighbor base station in step S20. Here, the terminal 10 scans the power of the neighbor base station with no need to refer to a broadcast channel value of the serving base station 20. More specifically, during the scanning interval, the subscriber terminal 10 measures the power of the neighbor base stations, without demodulating the broadcast channel value, which is included in a frame transmitted from the serving base station 20 and contains the frame configuration information, such as downlink map (DL-MAP) or uplink map (UL-MAP), of the serving base station 20. Step S20 is continuously performed during the period of the scanning interval. The subscriber terminal 10 repeats step S20 until the scanning interval is terminated in step S22.

When data must be transmitted to the subscriber terminal 10 from the serving base station 20 during the scanning interval of the subscriber terminal 10 in step S24, the serving base station 20 stands by for transmission of the data (i.e., suspends the transmission of the data) to the terminal 10 during the scanning interval of the terminal 10 in step S26.

When the scanning interval of the terminal 10 ends, the serving base station 20 transmits the data to the subscriber terminal 10. The serving base station 20 does not communicate with the subscriber terminal 10 during the scanning interval. For example, even if there is data to be transmitted from the serving base station 20 to the subscriber terminal 10, the serving base station 20 waits for the end of the scanning interval of the terminal 10, and transmits the data to the terminal 10 when the scanning interval is terminated.

Therefore, the prior art has a problem that the subscriber terminal 10 cannot communicate with the serving base station 20 while measuring the power of the neighbor base station. Additionally, the operating restrictions of the prior art lowers communication efficiency of the broadband wireless access communication system.

Therefore, the present invention has been designed in view of the above-described problems.

It is the object of the present invention to provide a method for planning cells in a broadband wireless access communication system and a method for measuring the power of a neighbor base station in the same system, thereby increasing communication efficiency of the broadband wireless access communication system.

This object is solved by the subject matter of the independent claims.

Preferred embodiments are defined in the dependent claims.

It is an aspect of the present invention to provide a method for planning cells in a broadband wireless access communication system and a method for measuring the power of a neighbor base station in the same system, whereby a subscriber terminal can measure the power of the neighbor base station more effectively.

It is a further aspect of the present invention to provide a method for planning cells in a broadband wireless access communication system and a method for measuring the power of a neighbor base station in the same system, whereby a subscriber terminal can measure the power of neighbor base stations without setting a separate scanning interval.

It is another aspect of the present invention to provide a method for planning cells in a broadband wireless access communication system and a method for measuring the power of a neighbor base station in the same system, whereby a subscriber terminal can measure the power of neighbor base stations during a time section or a duration in a frame in which there is no data assigned to the subscriber terminal.

It is yet another aspect of the present invention to provide a method for planning cells in a broadband wireless access communication system and a method for measuring the power of a neighbor base station in the same system, whereby a subscriber terminal communicates simultaneously with two base stations with broadcast channels that are located differently.

In accordance with one aspect of the present invention, the above and other objects are accomplished by a method for planning cells of a broadband wireless access communication system, wherein when subscriber terminals included in the broadband wireless access system receive data frames, respective frame start offsets of a plurality of base stations are set differently in a range where data frames received from the plurality of base stations do not collide with each other. In particular, it is preferable that a frame start offset of a serving base station of the subscriber terminal and respective frame start offsets of its neighbor base stations are set to be spaced at least a predetermined time section apart from each other, said predetermined time section being at least equal to a duration of five Orthogonal Frequency Division Multiplexing (OFDM) symbols.

In accordance with another aspect of the present invention, there is provided a method for measuring power of neighbor base stations in a broadband wireless access communication system in which respective frame start offsets of the neighbor base stations are spaced at least a predetermined time apart from each other, said method comprising the steps of: a) analyzing, by a subscriber terminal, a broadcast channel including configuration information of a data frame that the subscriber terminal receives from a serving base station, and determining whether there is an up/down link section allocated to the subscriber terminal in the received frame; and b) measuring power of a neighbor base station using an up/down link section of the received frame, if there is no up/down link section allocated to the subscriber terminal in the received frame in step a).

The above object and other aspects, features, and other advantages of the present invention will be more clearly understood from the following detailed description taken in conjunction with the accompanying drawings, in which:
Fig. 1 is a flow chart illustrating a method for scanning a power of a neighbor base station in a conventional broadband wireless access communication system;
Fig. 2 illustrates a conventional data frame structure of an OFDMA broadband wireless access communication system;
Fig. 3 illustrates frame start offsets of neighbor base stations to which a cell planning method of a broadband wireless access communication system according to an embodiment of the present invention is applied;
Fig. 4 illustrates a format of a message for informing subscribers of information about neighbor base station according to an embodiment of the present invention; and
Fig. 5 is a flow chart illustrating a method for scanning a power of a neighbor base station in a broadband wireless access communication system according to an embodiment of the present invention.

Preferred embodiments of the present invention will be described in detail herein below with reference to the annexed drawings. In the following description, a detailed description of known functions and configurations incorporated herein will be omitted when it may make the subject matter of the present invention rather unclear.

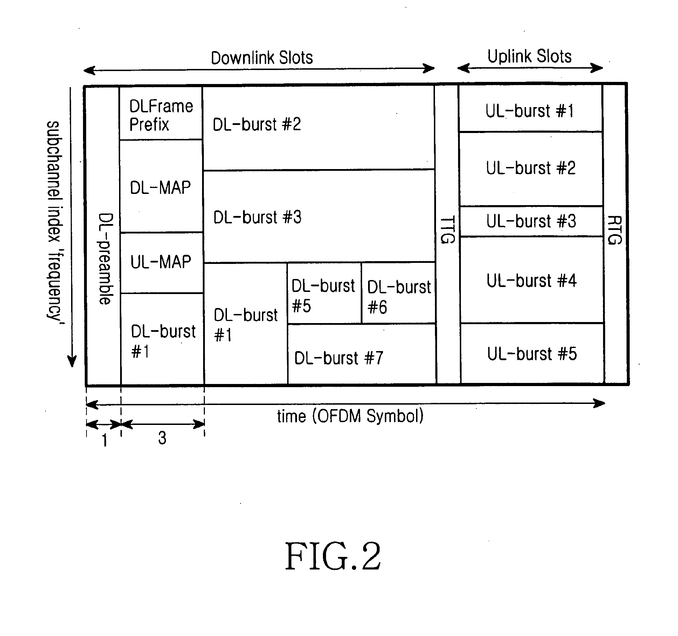

Fig. 2 illustrates a conventional data frame structure of an OFDMA (Orthogonal Frequency Division Multiple Access) broadband wireless access communication system. As illustrated in this figure, the data frame of the OFDMA broadband wireless access communication system includes both an uplink and a downlink in the frame, and includes a TTG (Transmit Time Gap) and an RTG (Receive Time Gap) between the uplink and the downlink. In this example, the data frame includes a DL sub-frame for the downlink in the left portion of the frame and a UL sub-frame for the uplink in the right portion, and each frame includes a preamble, a UL-map (uplink map) and a DL map (downlink map).

In the example illustrated in Fig. 2, the vertical axis is a frequency axis that represents the subchannel index of an OFDM (Orthogonal Frequency Division Multiplexing) symbol, where different positions along the vertical axis correspond to different frequencies. That is, different frequencies (or signals of different frequencies) transmitted at the same time are arranged along the vertical axis. Accordingly, different positions along the vertical axis correspond to different IFFT (Inverse Fast Fourier Transform) inputs.

The horizontal axis is a time axis that is divided into OFDM symbol durations. In Fig. 2, the downlink preamble comprises one OFDM symbol, and a broadcasting section (for example, a downlink frame prefix (DLFrame Prefix), a downlink map (DL-MAP), and an uplink map (UL-MAP)) comprises 3 OFDM symbols for each slot. The remaining downlink burst sections (i.e., DL-burst #1, DL-burst #2, DL-burst #7, etc.) each comprise OFDM symbols in multiples of 3.

After receiving a data frame having the above configuration from the serving base station, each subscriber terminal in the broadband wireless access communication system synchronizes with the serving base station using a downlink preamble (DL-preamble) in the received data frame. Each subscriber terminal demodulates a broadcast channel comprising 3 OFDM symbols, which includes a downlink frame prefix (DL Frame Prefix), a downlink map (DL-MAP), and an uplink map (UL-MAP), and then determines whether the downlink and uplink sections of the current frame are to be read by the subscriber terminal.

The subscriber terminals generally wait for a next frame reception, if the determined result is that there are no downlink and uplink sections in the current frame that are to be read by the subscriber terminal. That is, subscriber terminals in the conventional broadband wireless access communication system stand by for a next frame reception without performing any operation, if the current frame contains no downlink and uplink sections that should be referred to by them.

More specifically, in four OFDM symbol durations from among the time sections (OFDM symbol durations) of the horizontal axis illustrated in Fig. 2, each subscriber terminal determines whether there are downlink and uplink sections that are to be read by the subscriber terminal. If there are no such downlink and uplink sections that are to be read, the subscriber terminal does not perform any operation during the remaining symbol durations (i.e., during the duration of the total OFDM symbols minus 4 OFDM symbols).

Accordingly, the present invention uses the remaining symbol durations to measure a power of a neighbor base station. As a result, the present invention sets different frame start offsets for base stations when performing cell planning of the broadband wireless access communication system.

In order to measure the power of a neighbor base station, the subscriber must be synchronized with the neighbor base station and thus be able to demodulate a downlink preamble of the neighbor base station. In addition, the position of a downlink preamble of the neighbor base station must not overlap with the position of a broadcast channel of the serving base station. This requirement enables the subscriber terminal to measure the power of the neighbor base station while continually demodulating the broadcast channels included in the data frames transmitted from the serving base station, when there is no need to perform data transmission in the duration between the broadcast channels.

Accordingly, the following facts must be considered when determining the respective frame start offsets of base stations in performing cell planning according to the present invention. First, the positions of downlink preambles (DL Preamble) of data frames from different base stations must not overlap with each other. Therefore, the respective frame start offsets of base stations must be spaced at least one OFDM symbol apart.

In addition, while demodulating the broadcast channels included in the data frames transmitted from the serving base station, the subscriber terminal must measure the power of a neighbor base station during the remaining durations. As a result, the respective frame start offsets of base stations must be spaced at least three OFDM symbols apart because the broadcasting slot in the data frame occupies or includes 3 OFDM symbols as illustrated in Fig. 2. Consequently, the start offsets of base stations must be spaced at least 4 OFDM symbols apart.

In addition, it is preferable that the start offsets of each base station be spaced an additional OFDM symbol, on top of the 4 OFDM symbols, apart to have additional time to turn on/off the radio frequency (RF) power. In other words, it is preferable to set the respective frame start offsets of base stations to be spaced at least 5 OFDM symbols apart.

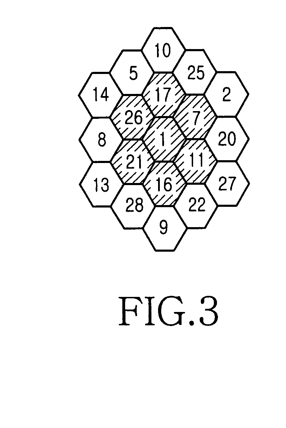

Fig. 3 illustrates frame start offsets of neighbor base stations to which a cell planning method of a broadband wireless access communication system according to an embodiment of the present invention is applied. That is, Fig. 3 illustrates the number of OFDM symbol offsets the frame of each cell starts with when one frame is divided into thirty OFDM symbol durations. As described above with reference to Fig. 2, if the frame start time of a base station cell to which a subscriber terminal belongs and the frame start time of its neighbor base station cell are spaced at least 5 OFDM symbols apart, it is possible for the subscriber terminal to simultaneously demodulate data of the respective broadcast channels of the two base stations.

Referring to Fig. 3, each number in the center of each cell denotes the frame start offset of the cell. It can be seen in Fig. 3 that the frame start offset of each cell and the frame start offset of its neighbor cell are spaced at least 5 OFDM symbols apart. Accordingly, if a subscriber terminal belonging to any one of the cells illustrated in Fig. 3 has determined that there is a time section in which there is no need to perform data communication with a serving base station by demodulating a broadcast channel included in a data frame transmitted from its serving base station, , the subscriber terminal can measure the power of another base station (for example, its neighbor base station) by synchronizing itself with the another base station during the time section.

In order to measure the power of a neighbor base station, the subscriber terminal must know the frequency of the neighbor base station and the frame start offset thereof. Accordingly, in order to let each subscriber terminal know the information of its neighbor base station, a message (MOB_NBR-ADV message) to be transmitted from its serving base station to the subscriber terminal must contain the frame start offset information of the neighbor base station.

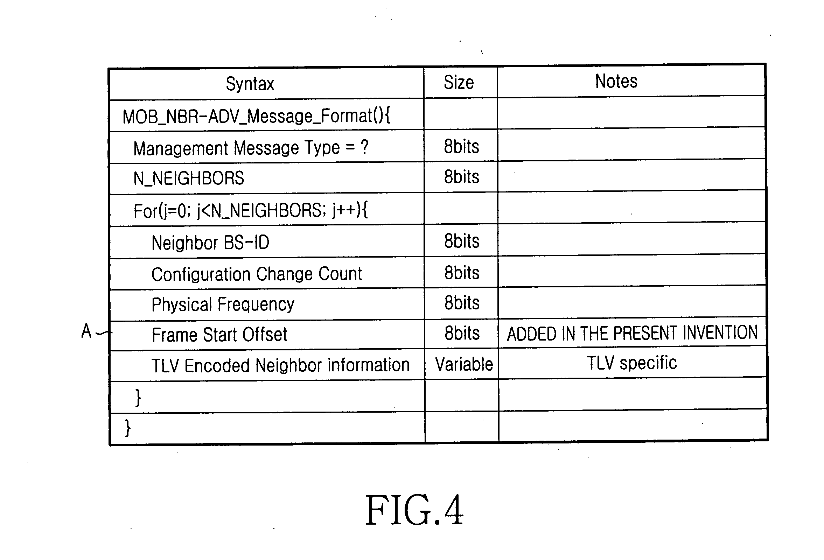

Fig. 4 illustrates an example of a MOB_NBR-ADV message. As illustrated in Fig. 4, the MOB_NBR-ADV message contains various information of the neighbor base station (for example, Neighbor Base Station Identification (BS-ID), Configuration Change Count, Physical Frequency, etc.). In particular, a frame start offset of the neighbor base station (denoted by "A") is added to the message in the example according to the present invention. That is, in the present invention, an MOB_NBR-ADV message containing a frame start offset "A" of a neighbor base station is transmitted from a serving base station to each of the corresponding subscriber terminals, so that each subscriber terminal can measure the power of the neighbor base station with reference to the frame start offset of the neighbor base station when not performing data communication with the serving base station.

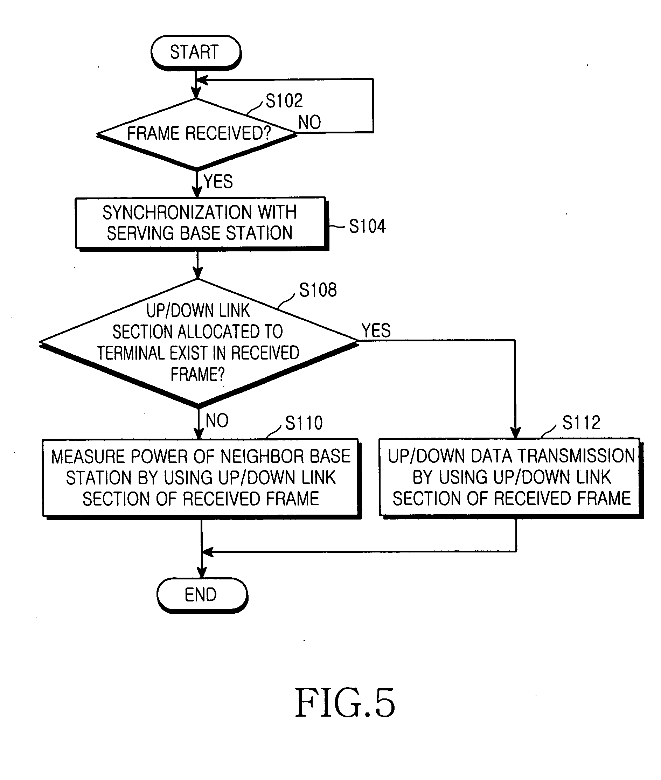

Fig. 5 is a flow chart illustrating a method for scanning a power of a neighbor base station in a broadband wireless access communication system according to an embodiment of the present invention. As illustrated in Fig. 4, when a subscriber terminal receives a data frame from a serving base station in step S102, the subscriber terminal synchronizes with the serving base station using a downlink preamble included in the data frame in step S104. The subscriber terminal then analyzes data of a broadcast channel (for example, a downlink map, an uplink map, etc.) of the received data frame to determine whether there is an up/down link section allocated to the subscriber terminal in the received data frame in step S108. That is, the subscriber terminal determines whether it performs data communication with the serving base station during the corresponding frame duration.

If there is no up/down link section allocated to the subscriber terminal in the received frame, the subscriber terminal measures the power of the neighbor base station by using the up/down link section (for example, a time section other than the duration of downlink preamble and broadcast symbols) of the received frame in step S110. However, if there is an up/down link section allocated to the subscriber terminal in the received frame in step S108, the subscriber terminal transmits the up/down data by using the up/down link section in step S112.

As is apparent from the description above, according to the present invention, with no need to set a separate scanning interval for measuring the power of a neighbor base station in a broadband wireless access communication system, a subscriber terminal in the system measures the power of the neighbor base station in a section of a data frame, received from a serving base station, in which there is no data allocated to the subscriber terminal. This makes it possible to increase transmission efficiency of a broadband wireless access communication system.

Additionally, it is possible for a subscriber terminal to simultaneously demodulate broadcast channel information from two different base stations whose broadcast channels are differently located, where each broadcast channel contains the frame configuration information of the corresponding base station. This enables the subscriber terminal to communicate simultaneously with a plurality of base stations.

As a result, the present invention overcomes a problem occurring in the prior art that a subscriber terminal cannot communicate with a serving base station in order to measure the power of the neighbor base station. Additionally, the present invention enables the subscriber terminal to measure the power of the neighbor base station more effectively.

Although the preferred embodiments of the present invention have been disclosed for illustrative purposes, those skilled in the art will appreciate that various modifications, additions, and substitutions are possible, without departing from the scope of the present invention as disclosed in the accompanying claims.

## Claims

1. A method for planning cells of a wireless access communication system, comprising the step of differently setting respective frame start offsets of a plurality of base stations in a range where data frames received respectively from the plurality of base stations do not collide with each other when a subscriber terminal included in the wireless access system receives the data frames.

2. The method according to claim 1, wherein the step of differently setting the respective offsets of the plurality of base stations comprises setting a frame start offset of a serving base station of the subscriber terminal and a frame start offset of a neighbor base station to be spaced at least a predetermined time section apart from each other,
wherein said predetermined time section is at least equal to a sum of a time section for synchronizing the subscriber terminal and the base stations and a time section for representing configuration information of a corresponding frame.

3. The method according to claim 1, wherein the step of differently setting the respective offsets of the plurality of base stations comprises setting a frame start offset of a serving base station of the subscriber terminal and a frame start offset of a neighbor base station to be spaced at least a predetermined time section apart from each other,
wherein said predetermined time section is at least equal to a sum of a time section for synchronizing the subscriber terminal and the base stations, a time section for representing configuration information of a corresponding frame, and a time section for controlling a radio frequency power.

4. The method according to claim 1, wherein the step of differently setting the respective offsets of the plurality of base stations comprises setting a frame start offset of a serving base station of the subscriber terminal and a frame start offset of a neighbor base station to be spaced at least a predetermined time section in Orthogonal Frequency Division Multiple symbol units apart from each other.

5. The method according to claim 4, wherein said predetermined time section is at least 5 Orthogonal Frequency Division Multiple symbols.

6. A method for scanning power of a neighbor base station from among a plurality of neighbor base stations by a subscriber terminal in a wireless access communication system in which respective frame start offsets of the neighbor base stations are spaced at least a predetermined time apart from each other, said method comprising the steps of:
a) analyzing a broadcast channel including configuration information of a data frame that the subscriber terminal receives from a serving base station;
b) determining whether there is an up/down link section allocated to the subscriber terminal in the received frame; and
c) measuring the power of the neighbor base station using an up/down link section of the received frame, if it is determined that there is no up/down link section allocated to the subscriber terminal in the received frame.

7. The method according to claim 6, wherein the up/down link section allocated to the subscriber terminal corresponds to a duration determined by subtracting a duration of a downlink preamble and broadcast symbols from an entire duration of the received frame.
